# EUROPÄISCHE PATENTSCHRIFT

(11) **EP 0 514 626 B1**
(45) Veröffentlichungstag und Bekanntmachung des Hinweises auf die Patenterteilung: **01.05.1996**
(21) Anmeldenummer: 92102739.7
(22) Anmeldetag: 19.02.1992
(51) Int. Cl.: B23Q 16/06, B23Q 16/08, B23Q 11/04

(54) **Werkzeugrevolver**
Tool turret
Revolver à outils

(30) Priorität: 23.05.1991 DE 4116774
(43) Veröffentlichungstag der Anmeldung: 25.11.1992
(73) Patentinhaber: Sauter Feinmechanik GmbH, D-72555 Metzingen (DE)
(72) Erfinder: Thumm, Helmut, Dipl.-Ing., W-7430 Metzingen (DE); Handel, Friedrich, Dipl.-Ing., W-7430 Metzingen (DE)
(74) Vertreter: Patentanwälte Bartels, Held und Partner

(56) Entgegenhaltungen:
- DE-A- 3 817 873
- DE-A- 3 817 893
- FR-A- 2 073 625

## Beschreibung

Die Erfindung betrifft einen Werkzeugrevolver, der die Merkmale des Oberbegriffs des Anspruches 1 aufweist.

Bei den bekannten Werkzeugrevolvern dieser Art sind die Zahnkränze des Revolverkopfes und des Revolvergehäuses sowie die Verzahnung des Verriegelungsgliedes als 60° Hirthverzahnungen ausgebildet und der Kolben wird von einem Hydrauliköl beaufschlagt. Die Erzeugung der Kraft, mit der das Verriegelungsglied gegen die beiden Zahnkränze gedrückt wird, auf hydraulischem Wege, bietet zwar den Vorteil, daß die wirksame Kolbenfläche relativ kleingehalten werden kann, was sich positiv auf den Raumbedarf des Werkzeugrevolvers auswirkt. Nachteilig ist andererseits, daß ein Hydrauliksystem vorhanden sein muß, an welches der Werkzeugrevolver angeschlossen werden kann, daß Hochdruckleitungen zwischen diesem System und dem Werkzeugrevolver benötigt werden und daß der Kolben zusammen mit dem ihn aufnehmenden Zylinder eine Wärmequelle im Inneren des Werkzeugrevolvers bildet, welche zu unerwünschten, sich auf die Bearbeitungsgenauigkeit auswirkende Wärmedehnungen führt.

Der Erfindung liegt die Aufgabe zugrunde, einen Werkzeugrevolver zu schaffen, der es mit möglichst einfachen Mitteln ermöglicht, diese Nachteile zu vermeiden. Diese Aufgabe löst ein Werkzeugrevolver mit den Merkmalen des Anspruches 1.

Ein Pneumatiksystem ist üblicherweise an jeder Werkzeugmaschine vorhanden. Daher bereitet eine pneumatische Betätigung des Kolbens keinerlei Schwierigkeiten, zumal die Verbindungsleitungen nur für einen relativ geringen Druck ausgebildet sein müssen und darüber hinaus die Abluft nicht in das Pneumatiksystem zurückgeführt werden muß. Obwohl bei dem Übergang von einer hydraulischen auf eine pneumatische Beaufschlagung des Kolbens die Betätigungskraft des Kolbens stark verringert wird, braucht der erfindungsgemäße Werkzeugrevolver hinsichtlich der wirksamen Kolbenfläche keine wesentliche Veränderung zu erfahren, weil durch die Verringerung des Flankenwinkels der Zähne die notwendige Verriegelungskraft so weit reduziert werden kann, daß sie von dem Kolben ohne Veränderung seiner wirksamen Kolbenfläche aufgebracht wird.

Um trotz des geringeren Flankenwinkels und der kleineren, erträglichen Ungenauigkeit bei der Ausrichtung der Verzahnungen aufeinander für einen nachfolgenden Eingriff diesen in jedem Falle ausführen zu können, ist vorzugsweise die Höhe der Zähne gemäß Anspruch 2 gewählt. Ferner ist es im Hinblick auf den geringen Flankenwinkel zweckmäßig, für die Zähne ein trapezförmiges Querschnittsprofil vorzusehen.

Da in der Regel auf den Revolverkopf äußere Kräfte nicht nur im Sinne eines Drehmomentes einwirken, sondern auch in einer Richtung parallel zur Drehachse des Revolverkopfes, was zu einem Kippmoment führt, ist bei einer bevorzugten Ausführungsform der Revolverkopf in axialer Richtung über vorgespannte Axiallager am Revolvergehäuse abgestützt. Der Kolben braucht dadurch nicht die zur Kompensation dieses Kippmomentes erforderliche Axialkraft aufzubringen.

Ein Vorteil des pneumatisch beaufschlagten Kolbens besteht auch darin, daß er bei einer Überlast, wie sie beispielsweise im Falle der Kollision eines Werkzeuges mit einem Werkstück auftreten kann, unter Kompression der ihn beaufschlagenden Luft so weit von wenigstens einem der beiden Zahnkränze wegbewegt werden kann, daß dieser Zahnkranz und die Verzahnung des Verriegelungsgliedes außer Eingriff kommen. Hierdurch kann in einfacher Weise verhindert werden, daß in einem solchen Überlastfall der Werkzeugrevolver oder Teile desselben beschädigt oder gar zerstört werden. Für die nach einem solchen Lösen der Verriegelung notwendige Rückführung des Revolverkopfes in die ursprüngliche Winkelstellung ist es von besonderem Vorteil, daß für den Rückführvorgang der Kolben druckentlastet werden kann. Die Verzahnungen treten dann nicht mit hoher Beschleunigung in Eingriff miteinander, wie dies der Fall wäre, wenn die Verdrehung des Revolverkopfes erfolgen würde, wenn der Kolben mit dem vollen Luftdruck beaufschlagt wäre.

Im folgenden ist die Erfindung anhand eines in der Zeichnung dargestellten Ausführungsbeispiels im einzelnen erläutert.

Es zeigen
- Fig. 1: einen unvollständig und schematisch dargestellten Längsschnitt des Ausführungsbeispiels,
- Fig. 2: einen Ausschnitt aus einem Querschnitt durch die Verzahnung des Revolverkopfes und des Verriegelungsgliedes,
- Fig. 3: einen vergrößert dargestellten Ausschnitt im Bereich III-III der Fig. 2.

Bei einem Werkzeugrevolver mit einem drehbar in einem Revolvergehäuse 1 gelagerten, scheibenförmigen Revolverkopf 2, der in bekannter Weise mit Aufnahmen 3 für Werkzeugträger versehen ist, ist an der gegen das Innere des Revolvergehäuses 1 weisenden Seite des Revolverkopfes 2 ein Zahnkranz 4 vorgesehen, der konzentrisch zur Drehachse des Revolverkopfes 2 liegt und eine gegen das Innere des Revolvergehäuses 1 weisende Radialverzahnung bildet.

Der Drehantrieb des Revolverkopfes 2 für eine Drehung des letzteren in eine andere der wählbaren Winkelstellungen erfolgt im Ausführungsbeispiel nicht unmittelbar über eine zentral angeordnete Welle 5, sondern einen einen Abschnitt der Welle 5 konzentrisch umgebenden, hohlzylindrischen Körper 6, an dessen einer Stirnfläche der Revolverkopf 2 anliegt. Schrauben 7 verbinden den Revolverkopf 2 mit dem hohlzylindrischen Körper 6. Die den Zahnkranz 4 tragende, ringförmige Materialpartie des Revolverkopfes 2 ist an ihrer Außenmantelfläche über ein Lager 8 an einem Ring 9 abgestützt, der mit dem Revolvergehäuse 1 verbunden ist und einen sich radial nach außen erstreckenden Flansch 9' bildet. Über ein zweites Radiallager 10 ist der hohlzylindrische Körper 6 drehbar im Revolvergehäuse 1 gelagert.

Der Drehantrieb des hohlzylindrischen Körpers 6 erfolgt im Ausführungsbeispiel über ein Planetenrad 11, das neben seiner dem Revolverkopf 2 abgekehrten Stirnfläche an ihm drehbar gelagert ist. Dieses Planetenrad 11 kämmt sowohl mit einem am Revolvergehäuse 1 vorgesehenen Zahnkranz 12 als auch einem Ritzel 13, das eine gemeinsame Nabe mit einem axial neben ihm angeordneten Zahnrad 14 hat. Diese gemeinsame Nabe ist einerseits mittels eines Lagers 15 auf der Welle 5 und andererseits mittels eines Lagers 16 in einer Bohrung einer Stirnwand 17 des Revolvergehäuses 1 gelagert. In dieser Stirnwand 17 ist außerdem der hintere Endabschnitt der Welle 5 mittels eines Lagers 18 gelagert. Das Zahnrad 14 steht mit einem Ritzel 19 in Eingriff, das drehfest zusammen mit einem Zahnrad 20 auf einer parallel zur Welle 5 angeordneten Hilfswelle 21 angeordnet ist, die drehbar im Revolvergehäuse 1 und der Stirnwand 17 mittels Lager 32 gelagert ist. Mit dem Zahnrad 20 kämmt ein Ritzel 22, das auf der Welle eines Antriebsmotors 23 sitzt, welcher am Revolvergehäuse 1 und an dessen Stirnwand 17 festgelegt ist.

Der am Revolvergehäuse 1 festgelegte Ring 9 bildet einen zweiten Zahnkranz 9'' in Form einer Radialverzahnung, deren Zähne eine radiale Verlängerung der Zähne 28 des Zahnkranzes 4 bilden, wenn diese auf die Zähne des zweiten Zahnkranzes 9'' ausgerichtet sind.

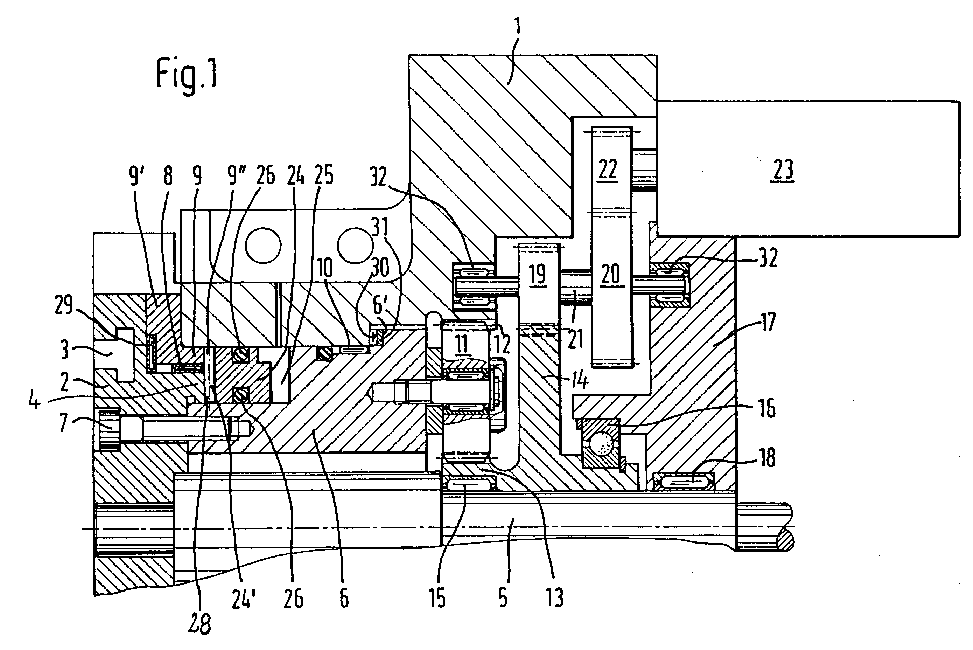

Für die Zentrierung des Revolverkopfes 2 und seine Verriegelung in den wählbaren Winkelstellungen ist ein ringförmiger Kolben 24 vorgesehen, dessen Innenmantelfläche mit der Innenmantelfläche des Zahnkranzes 4 und dessen Außenmantelfläche mit der Außenmantelfläche des zweiten Zahnkranzes 9'' fluchtet, da beide Zahnkränze in den ringförmigen Arbeitsraum 25 von dessen einer Stirnseite her ragen, in dem der Kolben 24 axial verschiebbar angeordnet ist. Wie Fig. 1 zeigt, wird der ringförmige Arbeitsraum 25 innen und an dem dem Revolverkopf 2 abgekehrten Ende von einer nutförmigen Ausdrehung des hohlzylindrischen Körpers 6 und außen von der Innenmantelfläche des Revolvergehäuses 1 begrenzt.

Der Kolben 24, der sowohl in seiner Außenmantelfläche als auch seiner Innenmantelfläche mit je einer Ringnut zur Aufnahme je einer Ringdichtung 26 versehen ist, weist an der dem Zahnkranz 4 und dem zweiten Zahnkranz 9'' zugewandten Stirnseite eine Radialverzahnung 24' auf, die korrespondierend zu den Verzahnungen der beiden Zahnkränze 4 und 9'' ausgebildet ist, damit der Revolverkopf 2 exakt in jeder wählbaren Winkelposition positioniert und spielfrei mit dem Revolvergehäuse 1 verriegalt werden kann.

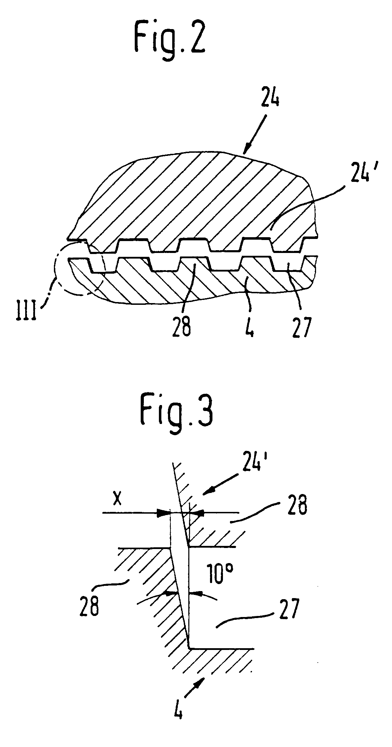

Da die wirksame Fläche des Kolbens 24 die bei einer hydraulischen Betätigung übliche Größe hat, um insoweit die Konstruktion und die Abmessungen des Werkzeugrevolvers nicht verändern zu müssen, für die Beaufschlagung des Kolbens 24 jedoch Druckluft mit einem Druck von nur etwa 5 bar vorgesehen ist, haben die Zähne 28 sowohl der beiden Zahnkränze 4 und 9'' als auch der Radialverzahnung 24' einen wesentlich kleineren Flankenwinkel als die üblicherweise verwendete 60°-Hirthverzahnung. Damit wegen der unvermeidbaren Ungenauigkeiten bei der Vorpositionierung des Revolverkopfes, das heißt dessen Ausrichtung auf die gewünschte Winkelstellung, beispielsweise mittels eines Positionierantriebs, die maximale Breite der Zahnlücken 27 die notwendige Größe im Vergleich zu der entsprechenden Breite der Zähne 28 an ihrem Kopf haben, ist, wie insbesondere Fig. 3 zeigt, die Höhe der Zähne 28 so gewählt, daß die maximale Breite der Zahnlücken 27 um den Wert 2 x größer ist als die Kopfbreite der Zähne 28, wobei die Größe x von der maximalen Toleranz bei der Vorpositionierung abhängt. Aufgrund dieser Zahnhöhe und des Flankenwinkels ergibt sich für die Zähne 28 die in Fig. 2 dargestellte trapezförmige Querschnittsform.

Bei dem gewählten halben Flankenwinkel der Zähne 28 von 10° ist die vom Kolben 24 erzeugte Axialkraft stets größer als die Axialkomponente der als Reaktionskraft der Werkzeuge von außen her auf den Revolverkopf 1 in tangentialer Richtung einwirkenden Kräfte.

Da der Revolverkopf 2 auch mit Werkzeugen bestückt sein kann, deren Raktionskraft parallel zur Drehachse des Revolverkopfes 2 wirkt, ist zwischen dem Flansch 9' des Ringes 9 und dem Revolverkopf 2 ein erstes Axiallager 29 und zwischen einer Innenschulter des Revolvergehäuses 1 und einer Außenschulter 6' des hohlzylindrischen Körpers 6 ein zweites Axiallager 30 angeordnet. Diese beiden Axiallager 29 und 30 sind vorgespannt, und zwar im Ausführungsbeispiel dadurch, daß der Revolverkopf 2 und der hohlzylindrische Körper 6 mittels der Schrauben 7 auf Block gezogen werden. Die Höhe der Vorspannung läßt sich beispielsweise mittels einer Ringscheibe 31 einstellen, die zwischen der äußeren Schulter 6' und dem zweiten Axiallager 30 angeordnet ist. Die beiden Axiallager 29 und 30 nehmen vollständig die durch äußere Kräfte, welche exzentrisch in axialer Richtung am Revolverkopf 2 angreifen, entstehende Kippbeanspruchung auf und verhindern dadurch, daß diese Beanspruchung durch die Axialkraft des Kolbens 24 kompensiert werden muß.

Da der Flankenwinkel der Zähne 28 noch außerhalb des Selbsthemmungsbereiches liegt, kann dann, wenn das am Revolverkopf 2 wirksame Drehmoment einen Grenzwert überschreitet, beispielsweise in Folge einer Kollision eines Werkzeuges mit dem Werkstück, der Kolben 24 unter Kompression der ihn beaufschlagenden Druckluft so weit verschoben werden, daß der Zahnkranz 4 freigegeben wird und der Revolverkopf 2 sich dadurch drehen kann. Es ist dabei zweckmäßig, eine Verdrehsicherung gemäß DE-A-38 17 893 vorzusehen, welche eine Mitnahme des Kolbens 24 mit dem Revolverkopf 2 sicherstellt. Eine solche Verdrehsicherung kann beispielsweise wenigstens ein Mitnehmerelement aufweisen, das sich in der Verschieberichtung des Kolbens 24 erstreckt sowie in diesen und den Revolverkopf eingreift. Eine andere Möglichkeit besteht darin, die Zahnhöhe der Zähne des Zahnkranzes 4 größer zu wählen als derjenigen des zweiten Zahnkranzes 9'', damit die Radialverzahnung 24' des Kolbens 24 nur außer Eingriff mit den Zähnen des zweiten Zahnkranzes 9'' kommt. Bei Verwendung einer derartigen Verdrehsicherung kann der Revolverkopf 2 nach einem Kollisionsfall mittels des Antriebsmotors 23 wieder in seine Ausgangslage zurückgedreht werden. Während dieses Rückdrehens ist der Kolben 24 vorzugsweise vollständig druckentlastet.

Eine solche Druckentlastung wird auch vorgenommen, ehe der Revolverkopf 2 in eine andere Winkelstellung gedreht wird, um ein anderes der von ihm getragenen Werkzeuge in die Arbeitsposition bringen zu können. Nach der Vorpositionierung des Revolverkopfes 2 in der neuen Winkelstellung wird der Kolben 24 wieder mit Druckluft beaufschlagt, damit seine Radialverzahnung 24' in spielfreien Eingriff mit den Zähnen der Zahnkränze 4 und 9'' kommt. Der Kolben 24 bleibt dann mit der Druckluft beaufschlagt.

## Patentansprüche

1. Werkzeugrevolver, der zwei konzentrisch zur Drehachse seines Revolverkopfes (2) radial nebeneinander angeordnete und relativ zum Revolverkopf (2) bzw. zum Revolvergehäuse (1) unbewegliche Zahnkränze (4, 9'') aufweist, deren Zähne (28) gegen ein im axialer Richtung neben dem beiden Zahnkränzen (4, 9'') gleichachsig zu diesen angeordnetes Verriegelungsglied weisen, das mittels eines axial verschiebbaren Kolbens (24) im einer Verriegelungsstellung haltbar ist, im der seine Zähne (24') spielfrei mit denjenigen der beiden Zahnkränze im Eingriff stehen, dadurch gekennzeichnet, daß
a) der Kolben (24) Teil eines Pneumatikaggregates ist,
b) der Winkel, den die Flanken der Zähne (28) der Zahnkränze (4, 9'') und des Verriegelungsgliedes einschließen, von dem bei einer Beaufschlagung des Kolbens (24) mit einem Hydraulikmittel üblichen Wert von 60° auf einen Wert reduziert ist, bei dem die an den Zähnen (28) auftretende axiale Komponente der in Umfangsrichtung des Revolverkopfes (2) wirksamen Werkzeug-Reaktionskräfte kleiner ist als die Summe aus der vom Kolben (24) erzeugbaren Axialkraft und der auf der Reibung zwischen den Zähnen (28) ruhenden Axialkraft.

2. Werkzeugrevolver nach Anspruch 1, dadurch gekennzeichnet, daß die Höhe der Zähne (28) entsprechend der im Hinblick auf den Streubereich bei der Positionierung des Revolverkopfes (2) erforderlichen maximalen Breite der Zahnlücken (27) gewählt ist.

3. Werkzeugrevolver nach Anspruch 1 oder 2, dadurch gekennzeichnet, daß die Zähne (28) ein trapezförmiges Querschnittsprofil haben.

4. Werkzeugrevolver nach einem der Ansprüche 1 bis 3, dadurch gekennzeichnet, daß der Revolverkopf (2) in axialer Richtung über vorgespannte Axiallager (29, 30) am Revolvergehäuse (1) abgestützt ist.

5. Werkzeugrevolver nach einem der Ansprüche 1 bis 4, gekennzeichnet durch eine Verdrehsicherung, welche das Verriegelungsglied in seiner Entriegelungsstellung gegen eine Verdrehung relativ zum Revolverkopf (2) sichert.

## Claims

1. Tool turret which has two ring gears (4, 9'') located concentrically to the axis of rotation of its turret head (2) radially next to each other and immobile in relation to the turret head (2) or to the turret casing (1), the teeth (28) of which point towards a locking member located on the same axis to these in an axial direction near to the two ring gears (4, 9''), it being possible to keep said member in a locking position by means of an axially sliding piston (24), in which position its teeth (24') are engaged without play with those of the two gear wheels, characterized in that:
a) the piston (24) is part of a pneumatic unit,
b) the angle enclosed by the flanks of the teeth (28) of the ring gears (4, 9'') and the locking member, is reduced from the usual value of 60° for impacting the piston (24) with a hydraulic medium, to a value at which the axial component of the effective tool reaction forces in a peripheral direction of the turret head (2) is smaller than the total of the axial force which can be produced by the piston (24) and the axial force based on the friction between the teeth (28).

2. Tool turret according to Claim 1, characterized in that the height of the teeth (28) is selected in accordance with the required maximum width of the tooth gaps (27) with regard to the scatter range when positioning the turret head (2).

3. Tool turret according to Claim 1 or 2, characterized in that the teeth (28) have a trapezoidal cross-sectional profile.

4. Tool turret according to one of Claims 1 to 3, characterized in that the turret head (2) is supported in an axial direction through preloaded thrust bearings (29, 30) on the turret casing (1).

5. Tool turret according to one of Claims 1 to 4, characterized by a protection against torsion which secures the locking member in its non-locking position against torsion in relation to the turret head (2).

## Revendications

1. Tourelle tournante porte-outils qui présente, disposées concentriquement par rapport à l'axe de rotation de sa partie sommitale (2), radialement côte à côte et immobiles par rapport à ladite partie sommitale (2) et au corps de la tourelle, deux couronnes dentées (4, 9'') dont les dents (28) sont orientées vers un organe de blocage disposé coaxialement aux deux couronnes deptées (4, 9'') et adjacent à celles-ci en direction axiale, ledit organe de blocage pouvant être fixé, au moyen d'un piston (24) axialement mobile, dans une position de blocage dans laquelle ses dents (24') sont en prise, sans jeu, avec celles des deux couronnes dentées, caractérisée en ce que :
a) le piston (24) fait partie intégrante d'un appareil pneumatique,
b) l'angle intérieur, formé par les flancs des dents (28) des couronnes (4, 9'') et l'organe de blocage, et dont la valeur habituelle, lorsque le piston (2) est placé sous l'effet d'un fluide hydraulique est de 60°, diminue pour atteindre une valeur à laquelle la composante axiale, apparaissant sur les dents (28), des forces réactionnelles de l'outil s'exerçant dans le sens périphérique de la partie sommitale de la tourelle (2), est inférieure à la somme des deux forces axiales dont l'une est générée par le piston (24) et l'autre issue du frottement entre les dents (28).

2. Tourelle tournante porte-outils selon la revendication 1, caractérisée en ce que la hauteur des dents (28) est sélectionnée en fonction de la largeur maximale des entre-dents requise (27) pour assurer la reproductibilité de positionnement de la partie sommitale de la tourelle (2).

3. Tourelle tournante porte-outils selon la revendication 1 ou 2, caractérisée en ce que les dents (28) ont une section transversale dont le profil est de forme trapézoïdale.

4. Tourelle tournante porte-outils selon les revendications 1 à 3, caractérisée en ce que la partie sommitale (2) de la tourelle s'appuie en direction axiale sur le corps de la tourelle par l'intermédiaire de paliers axiaux (29, 30) placés sous une tension initiale.

5. Tourelle tournante porte-outils selon les revendications 1 à 4, caractérisée par la présence d'une sécurité anti-rotation qui sécurise l'organe de blocage dans sa position débloquée contre toute rotation inopportune par rapport à la partie sommitale (2) de la tourelle.
